# EUROPÄISCHE PATENTANMELDUNG

(11) **EP 1 096 614 A2**
(43) Veröffentlichungstag der Anmeldung: **02.05.2001**
(21) Anmeldenummer: 00121503.7
(22) Anmeldetag: 29.09.2000
(51) Int. Cl.: H01R 13/527, H02K 5/22, H02K 5/136

(54) **Elektrische Maschine**

(30) Priorität: 25.10.1999 DE 19951302
(71) Anmelder: SIEMENS AKTIENGESELLSCHAFT, 80333 München (DE)
(72) Erfinder: Darmann, Guenter, 90574 Rosstal (DE); Hilneder, Siegfried, 91126 Schwabach (DE); Huemer, Thomas, Dipl.-Ing., 90451 Nürnberg (DE)

(57) **Zusammenfassung**

Um einen kostengünstigen und leicht montierbaren Anschlußklemmenkasten für unterschiedliche Leistungskabeleinführungen zu schaffen wird eine elektrische Maschine mit zumindest einem Anschlußklemmenkasten (1) vorgeschlagen, der maschinenseitig entsprechend isolierte Leitungsdurchführungen und zumindest eine Außenleitereinführung aufweist, und als Gußteil ausgeführt ist.

## Beschreibung

Die Erfindung betrifft eine elektrische Maschine für eine Anschlußspannung U_{N} ≥ 1kV mit zumindest einem Anschlußklemmenkasten mit einem Gehäuse, das maschinenseitig entsprechend isolierte Leitungsdurchführungen und zumindest eine Außenleitereinführung aufweist.

Bei diesen gattungsgemäßen elektrischen Maschinen bilden bisherige Anschlußklemmenkasten eine Verbundstahlkonstruktion. Dabei sind Stahlbleche und Stahlgußteile miteinander verschweißt und bilden mit einem Graugußgrundrahmen, der mit dem Unterteil des Anschlußklemmenkasten verschraubt ist, die Verbundstahlkonstruktion. Diese Verbundstahlkonstruktion weist ein hohes Eigengewicht auf, so daß die Handhabung vor allem auf einer Anlage äußerst umständlich und schwierig ist. Um dieses Gewichtsproblem zu reduzieren, sind auch Anschlußklemmenkasten aus Blechschalen im Einsatz. Diese verhältnismäßig dünnen Blechschalen eines derartigen Anschlußklemmenkastens und die große Stutzenausladung regen den Anschlußklemmenkasten verhältnismäßig leicht zu Eigenschwingungen an, die zu erhöhten Geräuschemissionen führen. Ebenso gestaltet sich der Spritzwasserschutz in Schweißkonstruktion sehr aufwendig und teuer, vor allem dann, wenn mit planer Flachdichtung gearbeitet wird. Die bisher bekannten Anschlußklemmenkasten haben eine oder mehrere Kabeleinfuhrungsöffnungen und sind demnach nur für die jeweilige Anzahl von Kabeln geeignet.

Der Erfindung liegt die Aufgabe zugrunde, eine sichere, kostengünstige und leicht montierbare Konstruktion eines Anschlußklemmenkastens zu schaffen, die für die Leitungseinführungen unterschiedlicher Leistungskabel (ein- oder mehradrig) ausgelegt ist und dabei eine schwingungsarme Ausführung darstellt. Außerdem soll der Anschlußklemmenkasten in allen Anbaulagen spritzwassergeschützt sein und einen Berstschutz aufweisen.

Die Lösung der gestellten Aufgabe gelingt dadurch, daß zumindest das ein- oder mehrteilige Gehäuse des Anschlußklemmenkastens als gegossenes/gegossene Teil/Teile ausgeführt ist/sind.

Dadurch erhält man einen schwingungsarmen Anschlußklemmenkasten, der auch die an ihn gestellten Spritzwasserschutzanforderungen, erfüllt. Auch bei mehreren Teilen sind die Spritzwasserschutzanforderungen erfüllt, da die Stoßkanten der einzelnen Teile gießtechnisch so ausgebildet sind, daß kein Spritzwasser nach innen gelangt.

Vorteilhafterweise ist der Anschlußklemmenkasten aus leicht gießbaren Materialien wie Leichtmetall (z.B. Aluminium) Keramik, oder Kunststoff hergestellt. Damit erleichtert sich die Handhabung dieses Anschlußklemmenkastens vorzugsweise auf der Anlage, wo es gegebenenfalls an Montagehilfen, z.B. Kleinkränen mangelt um einen derartigen Anschlußklemmenkasten an der elektrischen Maschine anzubringen. Der Anschlußklemmenkasten läßt sich aus den genannten Materialien kostengünstig herstellen und da konstante Wanddicken und ein konstantes Materialgefüge besteht, ist eine wiederholgenaue und betriebssichere Ausführung des Anschlußklemmenkastens gewährleistet.

In einer weiteren Ausführungsform ist insbesondere für den Anschlußklemmenkasten aus wenig kurzschlußfestem Material wie z.B. dem Aluminiumkokillenguß, ein Abschmelzschutz im Bereich der Anschlußklemmen vorgesehen. Dies wird durch zumindest teilweise Auskleidung der Innenseite des Anschlußklemmenkastens mit Stahlblech oder Silikatgeweben oder anderen feuerfesten Geweben erreicht. Dabei werden insbesondere die den Anschlußklemmen benachbarten Innenwände aufgrund der dort geringen Schlagweiten und der bevorzugten Blasrichtung eines eventuell entstehenden Lichtbogens bevorzugt ausgekleidet.

Damit werden u.a. die Anforderungen bezüglich eines Kurzschlußfalles in einem Anschlußklemmenkasten erfüllt.

In einer vorteilhaften Ausführungsform weist der Anschlußklemmenkasten im Bereich der Außenleitereinführung Adapter auf, die jeweils für die vorgesehenen Leistungskabel (ein- oder mehradrige Leiter) geeignet sind. Dabei sind die einzelnen Adapter gegeneinander austauschbar oder der Anschlußklemmenkasten weist sämtliche Anschlußmöglichkeiten auf, die dann durch spanabhebende Vorgänge der jeweiligen Leiteranzahl des Leistungskabels anpaßbar sind. Der Anschluß anderer Adapter ist auch im Anschluß an spanabhebende Bearbeitungsvorgänge möglich.

In einer weiteren Ausführungsform weist der Anschlußklemmenkasten einen zumindest im Klemmenkurzschlußfall ansprechenden Berstschutz auf. Damit wird ein unkontrollierter Berstfall des Anschlußklemmenkastens, der insbesondere durch eine nahezu schlagartige Erhitzung des Innenraums im Kurzschlußfall durch den daraus resultierenden Druckanstieg verursacht wird, vermieden. Durch eine vorgegebene Ausblasrichtung einer im Normalbetriebsfall abgedeckten Ausblasöffnung kann der Personenschutz des Anlagenpersonals weiter gesteigert werden.

In einer weiteren Ausführungsform, insbesondere für Anschlußklemmenkasten mit mehreren Teilen gewährleistet ein überlappender Deckelrand und/oder eine Formdichtung z.B. eine Rundschnurdichtung im Bereich einer Teilfuge den Spritzwasserschutz.

Die Erfindung sowie weitere vorteilhafte Ausgestaltungen der Erfindung gemäß Merkmalen der Unteransprüche werden im folgenden anhand schematisch dargestellter Ausführungsbeispiele in der Zeichnung näher erläutert. Darin zeigen:
FIG 1 einen Unterkasten eines Anschlußklemmenkastens,
FIG 2 einen Längsschnitt eines Anschlußklemmenkastens.

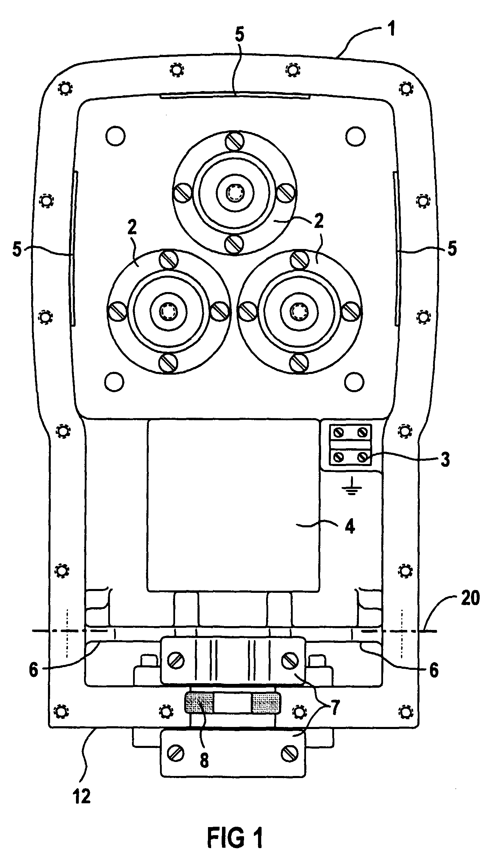

FIG 1 zeigt einen Unterkasten eines 6 kV Anschlußklemmenkastens 1 aus Aluminiumkokillenguß, dessen geometrischen Abmessungen sich im wesentlichen an der DIN 42 962 Teil 1 orientieren. Im oberen, leicht ausgebauchten Teil des Anschlußklemmenkastens 1 befinden sich die Anschlußklemmen 2. Dort sind nicht näher dargestellte Leistungskabel zur dreiphasige Versorgung einer nicht näher dargestellten elektrischen Maschine anschließbar. An die Erdungsklemme 3, die z.B. als eingegossener Stahlbolzen ausgeführt ist, sind u.a. die Kabelabschirmungen des Leistungskabels anschließbar. Unterhalb der Anschlußklemmen 2 ist eine vorzugsweise nach außen aufklappbarer Berstschutz 4 vorgesehen, der während eines Störfalls, z.B. Kurzschluß im Anschlußklemmenkasten 1 (Klemmenkurzschluß), anspricht und so ein unkontrolliertes Bersten des Anschlußklemmenkastens 1 verhindert. Dabei verbleibt z.B. eine als Berstschutz 4 vorgesehene Druckentlastungsklappe am Anschlußklemmenkasten 1.

Der Anschlußklemmenkasten 1 weitet sich nach oben in Richtung der Anschlußklemmen 2, um die für die jeweilige Nennbetriebsspannung erforderlichen Mindestschlagweiten insbesondere zu den Innenwänden des Anschlußklemmenkastens 1 einzuhalten. Außerdem ist vorzugsweise im Bereich der Anschlußklemmen 2 ein Abschmelzschutz 5 vorgesehen, der als Stahlblech oder feuerresistentes Gewebe wie z.B. Silikatgewebe ausgeführt ist. Damit wird insbesondere im Kurzschlußfall (Lichtbogen gegen die Innenwand) ein vorzeitiges Durchbrennen der Aluminiumwände des Anschlußklemmenkastens 1 vermieden. Der Abschmelzschutz 5 ist auf der Innenwand im Bereich der Anschlußklemmen 2 angeordnet. Vorzugsweise sind die Stahlbleche oder feuerfesten Materialien in nicht näher dargestellten Ausnehmungen der Innenwand des Anschlußklemmenkastens 1 positioniert.

Im unteren Teil des Anschlußklemmenkastens 1 ist die Leistungskabeleinführung mit zwei Zugentlastungen 7 vorgesehen. In die für das Leistungskabel vorgesehene Durchstecköffnung des Anschlußklemmenkastens 1 ist eine Dichtung 8 eingesetzt, die insbesondere den erforderliche Spritzwasserschutz gewährleistet. Die nach innen ragenden Wandvorsprünge 6 beinhalten die Möglichkeit bei drei Einzelleistungskabel den unteren Teil des Anschlußklemmenkastens 1 abzufräsen und so einen dichten Anschlußklemmenkasten 1 für drei einadrige Leistungskabel zu erhalten. Als Alternative ist an der Trennlinie 20 die Möglichkeit gegeben, je nach vorliegendem Ein- oder Mehrleiterkabel den dazu passenden Kabeleinführungsadapter zu wählen und am Anschlußklemmenkasten 1 anzubringen.

Der Anschlußklemmenkasten 1 weist aufgrund seines Herstellungsverfahrens konstante Wanddicken auf. Das Material Aluminium gewährleistet eine leichte Handhabung insbesondere vor Ort bei Montieren des Anschlußklemmenkastens 1.

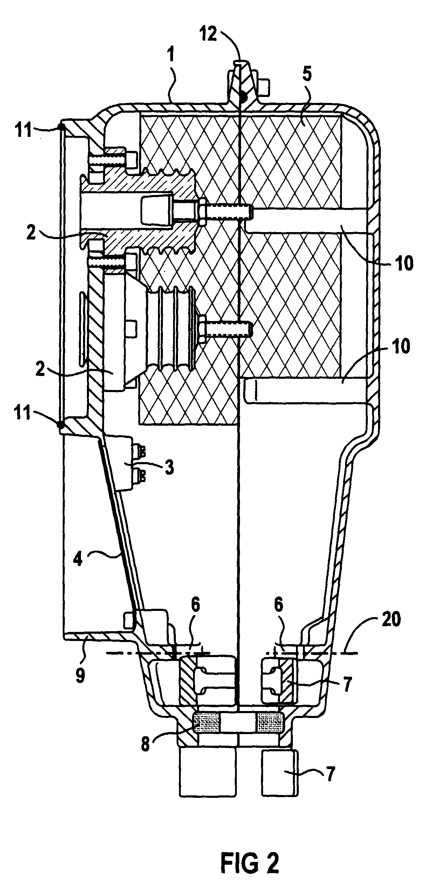

FIG 2 zeigt einen Längsschnitt eines derartigen Anschlußklemmenkastens 1. Dabei ist der vorzugsweise zweischalige Aufbau dieses Anschlußklemmenkastens 1 zu sehen. Die Wanddicken sind an der der Maschine abgewandten Seite nahezu konstant ausgeführt. Ebenso sind stabilisierende Stege und Rippen 10 insbesondere im Deckel des Anschlußklemmenkastens 1 vorgesehen. Die Alternative ein ein- oder mehradriges Leistungskabel einzusetzen ist im unteren Teil des Anschlußklemmenkastens 1 zu sehen. Zur Begrenzung des Ausklappwinkels des Berstschutzes 4 ist ein Ausblaseschacht 9 vorgesehen. Damit wird die Öffnung und die Ausblaserichtung durch den Ausblaseschacht 9 des Berstschutzes 4 festgelegt. Im Störfall (z.B. Klemmenkurzschluß) spricht der Berstschutz 4 z.B. eine Druckentlastungsklappe an und ermöglicht den im Anschlußklemmenkasten 1 vorhandenen Überdruck z.B. in Richtung elektrische Maschine auszuweichen. Die Druckentlastungsklappe ist dabei unverlierbar am Anschlußklemmenkasten 1 befestigt, um im Störfall umherfliegende Teile zu vermeiden. Entscheidend dabei ist, daß durch das Ansprechen dieses Berstschutzes 4 keine Personengefährdung auftritt. Durch den Ausblaseschacht 9 des Berstschutzes 4 wird die Personensicherheit des Bedienpersonals auf der Anlage weiter erhöht. Die Isolatoren der Anschlußklemmen 2 gewährleisten eine ausreichende Schlagweite und ausreichenden Kriechweg zwischen Anschlußklemme 2 und geerdetem Gehäuse des Anschlußklemmenkastens 1. Über den Anbausockel 11 ist der Anschlußklemmenkasten 1 an der elektrischen Maschine befestigt und gegen Spritzwasser mit einer Rundschnurdichtung ausreichend geschützt.

Durch Aufsetzen des Deckels erhält man durch überlappende Deckelränder 12, einer Rundschnurdichtung zusammen mit der Dichtung 8 einen spritzwassergeschützten Anschlußklemmenkasten 1. Die gezeigten Verbindungstechniken (z.B. Schraubverbindungen durch Schlitzschrauben) sind beispielhaft und lassen sich durch sämtliche gängigen Verbindungstechniken (Kleben, Schraubverbindungen mit Innenkonus, etc.) bedarfsweise ersetzen.

## Patentansprüche

1. Elektrische Maschine für eine Anschlußspannung U_{N} ≥ 1kV mit zumindest einem Anschlußklemmenkasten (1) mit einem Gehäuse, das maschinenseitig entsprechend isolierte Leitungsdurchführungen und zumindest eine Außenleitereinführung aufweist, **dadurch gekennzeichnet,** daß zumindest das ein- oder mehrteilige Gehäuse des Anschlußklemmenkastens (1) als gegossenes/gegossene Teil/Teile ausgeführt ist/sind.

2. Elektrische Maschine nach Anspruch 1, **dadurch gekennzeichnet,** daß der Anschlußklemmenkasten (1) aus leicht gießbaren Materialien herstellbar ist.

3. Elektrische Maschine nach Anspruch 1 oder 2, **dadurch gekennzeichnet,** daß ein Abschmelzschutz (5) im Anschlußklemmenkasten (1) insbesondere im Bereich der Anschlußklemmen (2) vorgesehen ist.

4. Elektrische Maschine nach Anspruch 3, **dadurch gekennzeichnet,** daß als Abschmelzschutz (5) Bleche und/oder feuerfeste Gewebe vorgesehen sind.

5. Elektrische Maschine nach einem oder mehreren der vorhergehenden Ansprüche, **dadurch gekennzeichnet,** daß die Außenleitereinführung anpaßbare Einführstutzen für ein- oder mehradrige Leiter aufweist.

6. Elektrische Maschine nach einem oder mehreren der vorhergehenden Ansprüche, **dadurch gekennzeichnet,** daß zumindest ein im Kurzschlußfall ansprechender Berstschutz (4) am Anschlußklemmenkasten (1) vorgesehen ist.

7. Elektrische Maschine nach Anspruch 6, **dadurch gekennzeichnet,** daß die Ausblasöffnung am Gehäuse des Anschlußklemmenkastens (1) zwischen Außenleitereinführung und dem Bereich der Anschlußklemmen (2) vorgesehen ist.

8. Elektrische Maschine nach einem oder mehreren der vorhergehenden Ansprüche, **dadurch gekennzeichnet,** daß auf der der elektrischen Maschine zugewandten Seite des Anschlußklemmenkasten (1) ein Anbausockel (11) vorgesehen ist.

9. Elektrische Maschine nach einem oder mehreren der vorhergehenden Ansprüche, **dadurch gekennzeichnet,** daß Mittel zur Abdichtung des Anschlußklemmenkastens (8), insbesondere zur Spritzwasserabdichtung vorgesehen sind.

10. Elektrische Maschine nach Anspruch 9, **dadurch gekennzeichnet,** daß ein überlappender Deckelrand (12) und/oder eine Formdichtung im Bereich einer Teilfuge vorgesehen sind/ist.
